# EUROPEAN PATENT APPLICATION

(11) **EP 4 821 819 A1**
(43) Date of publication of application: **14.10.2026**
(21) Application number: 26170866.3
(22) Date of filing: 07.04.2026
(51) Int. Cl.: B64D 11/06

(54) **PASSENGER SUITE EMERGENCY PASSAGE FEATURE**

(30) Priority: 07.04.2025 US 202563784416 P; 16.03.2026 US 202619567758; 16.03.2026 US 202619567862
(71) Applicant: Elevate Aircraft Seating LLC, Bothell, WA 98011 (US)
(72) Inventor: Wisniewsi, Max Zenon, Bothel, 98011 (US); Lee, Sahng Seok, Bothell, 98011 (US); Dillon, Michael Lawrence, Bothell, 98011 (US); Broccolo, Matteo Antonio, Bothell, 98011 (US); Carlioz, Victor Dominique, Bothell, 98011 (US)
(74) Representative: Arnold & Siedsma

(57) **Abstract**

A passenger suite of an aircraft. The passenger suite includes a seat and a divider. The divider is positioned between the seat and a passenger aisle of the aircraft. The divider includes a first fixed partition, a second fixed partition, and a movable partition. The first fixed partition is distanced a space from the second fixed partition, the space is sized to provide ingress and egress for a passenger into and out of the passenger suite. The movable partition is movable in a planar shape between an open position and a closed position on an axis through the space between the first fixed partition and the second fixed partition. The movable partition is flexible to an arcuate shape from the closed position when acted on by a force in a direction that intersects the axis.

## Description

### BACKGROUND INFORMATION

### 1. Field:

The present disclosure relates generally to exiting a passenger suite of an aircraft. More specifically, the present disclosure relates to a passenger suite emergency passage feature that provides a secondary opening mechanism of a passenger suite of a commercial aircraft for use if a primary opening mechanism fails.

### 2. Background:

Current layout of passenger suite designs adopt a standard divider separating the interior of a passenger suite of a commercial aircraft from the passenger aisle adjacent the passenger suite. The divider provides privacy for the occupants of the passenger suite while also providing a temporary/closable opening for ingress/egress to the passenger suite. The opening is typically closed off with a movable partition and may include various translation mechanisms that may include rails and hinges to accomplish moving the movable partition to allow ingress/egress of the passenger suite.

The government regulatory body that establishes national standards for qualifications of passenger suite design layouts and ensures consistent compliance with them also requires that passenger suites that include closable/movable partitions must include an emergency passage feature. The emergency passage feature is the means to escape the passenger suite in the event of failure of the passenger suite divider's primary opening mechanism. The emergency passage feature must be accessible from either side of the doorway/opening of the passenger suite. In other words, the emergency passage feature must be operable from either inside the passenger suite or from the passenger cabin aisle of the aircraft.

Therefore, it would be desirable to have a method and apparatus that takes into account at least some of the issues discussed above, as well as other possible issues.

### SUMMARY

An illustrative example of the present disclosure provides a divider for a passenger suite of an aircraft, particularly for providing an emergency passage feature. The divider includes a first fixed partition, a second fixed partition, and a movable partition. The first fixed partition is positioned between a passenger seat and a passenger aisle of the aircraft. The second fixed partition is distanced a space from the first fixed partition. The movable partition is preferably connected to the first fixed partition, and is movable, preferably via a translation device, in a planar shape between an open position and a closed position on an axis through the space between the first fixed partition and the second fixed partition, preferably such that the movable partition is retractable in the planar shape relative to the first fixed partition. Preferably, the movable partition hangs on a retractable cord. The movable partition is flexible to an arcuate shape from the closed position when acted on by a force in a direction that intersects the axis.

The translation device may be a linear rail connected to the first fixed partition and the movable partition. The translation device may further comprise a brace connected to an end of the movable partition, the brace slidable on the linear rail, and a constant force spring connected to the first fixed partition and the brace. The brace may be connected to the movable partition with a zipper or snaps.

When in the open position, the movable partition may be connected to the first fixed partition and when in the closed position, the movable partition may also be releasably connected to the second fixed partition. The first fixed partition may comprise a pocket for containment of the movable partition when in the open position. The space may provide room for ingress/egress of a passenger into/out of the passenger suite. The movable partition may comprise layered fabric and stitching. When in the closed position, the movable partition may be releasably connected to the second fixed partition with magnets or a ferromagnetic material paired with a magnet connected to both the second fixed partition and the movable partition. The movable partition may be padded on a first side facing the passenger aisle and on a second side facing the passenger seat.

Another illustrative example of the present disclosure provides a passenger suite of an aircraft, particularly for providing an emergency passage feature. The passenger suite includes a seat and a divider. The divider is positioned between the seat and a passenger aisle of the aircraft. The divider includes a first fixed partition, a second fixed partition, and a movable partition. The first fixed partition is distanced a space from the second fixed partition, the space is sized to provide ingress and/or egress for a passenger into and/or out of the passenger suite. The movable partition is preferably connected to the first fixed partition, and is movable, preferably via a translation device, in a planar shape between an open position and a closed position on an axis through the space between the first fixed partition and the second fixed partition, preferably such that the movable partition is retractable in the planar shape relative to the first fixed partition. The movable partition is reachable by the passenger seated in the seat. The movable partition may hang on a retractable cord. The movable partition is flexible to an arcuate shape from the closed position when acted on by a force in a direction that intersects the axis.

The translation device may be a linear rail connected to the first fixed partition. The passenger suite may further comprise a brace connected to an end of the movable partition, the brace slidable on the linear rail, and a constant force spring connected to the first fixed partition and the brace. The constant force spring may act on the movable partition to urge the movable partition to the open position. When in the open position, the movable partition may be connected to the first fixed partition and when in the closed position, the movable partition may also be releasably connected to the second fixed partition. When the movable partition is in the open position, the movable partition may be housed within a pocket of the first fixed partition.

A further illustrative example of the present disclosure provides a method for providing an emergency passage feature of a passenger suite of an aircraft, preferably using the divider or the passenger suite according to the above illustrative examples. The method includes assembling a first fixed partition and a second fixed partition, the first fixed partition configured to be distanced a space from the second fixed partition. The method also includes attaching a movable partition to the first fixed partition, the movable partition movable via a translation device in a planar shape between an open position and a closed position on an axis through the space between the first fixed partition and the second fixed partition such that the movable partition is retractable in the planar shape relative to the first fixed partition. The method also includes providing an emergency passage feature where the movable partition is movable in an arcuate shape from the closed position when acted on by a force in a direction that intersects the axis.

The movable partition may be releasably connected to the second fixed partition with hook and loop fasteners connected to the movable partition and the second fixed partition. The movable partition may be releasably connected to the second fixed partition with magnets or a magnet paired with a ferromagnetic material connected to the movable partition and the second fixed partition. The translation device may be a linear rail and the movable partition may be slidable on the linear rail connected to the first fixed partition and wherein the movable partition is retractable within the first fixed partition urged by a constant force spring connected to both the translation device and the first fixed partition when the movable partition is in both the planar shape and the arcuate shape.

A further illustrative example of the present disclosure provides a method for dividing a passenger suite of an aircraft from a passenger aisle of the aircraft. A first fixed partition and a second fixed partition are positioned between a passenger seat of the passenger suite and the passenger aisle of the aircraft. The first fixed partition is distanced a space from the second fixed partition. A movable partition is moved in a planar shape between an open position and a closed position on an axis through the space between the first fixed partition and the second fixed partition. The movable partition hangs on a retractable cord connected to the first fixed partition. The movable partition is moved in an arcuate shape from the closed position when acted on by a force in a direction that intersects the axis.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of a block diagram of a platform in accordance with an illustrative example;
**Figure 2** is an illustration of a divider of a passenger suite in an open position in accordance with an illustrative example;
**Figure 3** is an illustration of a divider of a passenger suite in a closed position in accordance with an illustrative example;
**Figure 4** is an illustration of a movable partition releasably connected to a fixed partition with a retractable cord in accordance with an illustrative example;
**Figure 5** is an illustration of a divider of a passenger suite in an open position in accordance with an illustrative example;
**Figure 6** is an illustration of a divider of a passenger suite in an open position in accordance with an illustrative example;
**Figure 7** is an illustration of a divider of a passenger suite in an open position in accordance with an illustrative example;
**Figure 8** is an illustration of a divider of a passenger suite in a closed position in accordance with an illustrative example;
**Figure 9** is an illustration of a translation device including linear rails in accordance with an illustrative example;
**Figure 10** is an illustration of a movable partition releasably connected to a fixed partition in accordance with an illustrative example;
**Figure 11** is an illustration of a divider of a passenger suite in an open position in accordance with an illustrative example;
**Figure 12** is an illustration of a flowchart of a process for dividing a passenger suite of an aircraft from a passenger aisle of the aircraft in accordance with an illustrative example;
**Figure 13** is an illustration of a block diagram of an aircraft manufacturing and service method in accordance with an illustrative example; and
**Figure 14** is an illustration of a block diagram of an aircraft in which an illustrative example may be implemented.

### DETAILED DESCRIPTION

The illustrative examples recognize and take into account one or more different considerations. For example, the illustrative examples recognize and take into account that standard layouts of passenger suite designs typically include a divider that separates the passenger suite from an aircraft passenger aisle. Typical passenger suite designs include a standard opening sized for passenger ingress and egress of the passenger suite of a commercial aircraft.

The illustrative examples also recognize and take into account that the standard passenger suite opening typically includes some sort of movable partition incorporating a primary opening mechanism to open and close the opening in order to provide privacy.

The illustrative examples also recognize and take into account that the national standard for design layouts of passenger suites also requires that passenger suites that include movable partitions must include an emergency passage feature operable to escape the passenger suite in the event of failure of the passenger suite divider's primary opening mechanism.

Thus, the illustrative examples provide a divider of a passenger suite of a commercial aircraft that enables overriding the primary opening mechanism to provide an emergency passage feature.

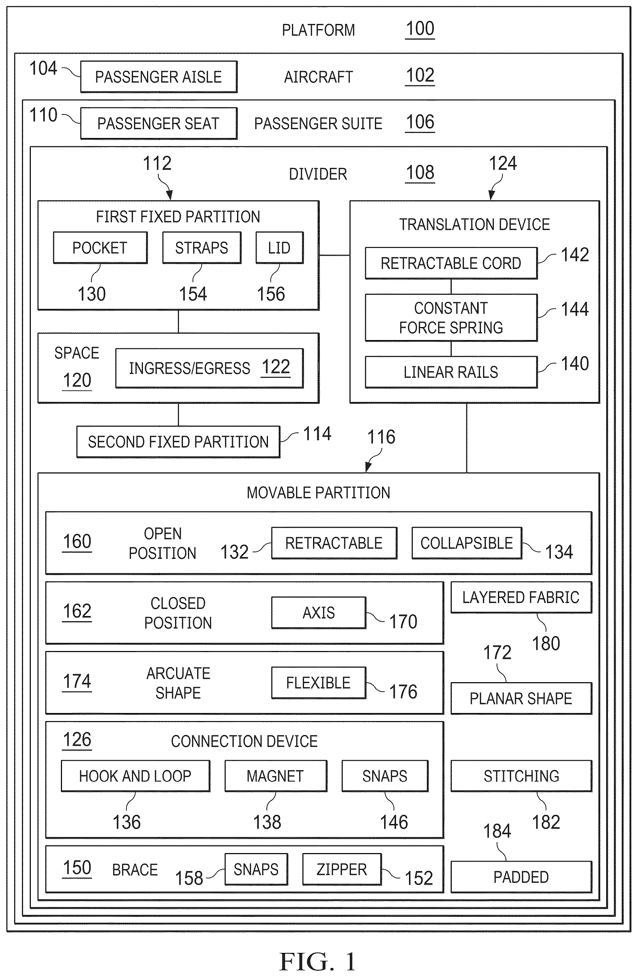

With reference now to the figures and, in particular, with reference to **Figure 1****,** an illustration of a block diagram of a platform is depicted in accordance with an illustrative example. Platform **100** has aircraft **102** in this illustrative example.

The illustration of aircraft **102 in** **Figure 1** is not meant to imply physical or architectural limitations to the manner in which an illustrative example may be implemented. For example, although aircraft **102** may be a commercial aircraft, aircraft **102** may be a military aircraft, a rotorcraft, a helicopter, an unmanned aerial vehicle, or any other suitable aircraft that includes a door assembly.

Although the illustrative examples are described with respect to an aircraft, the illustrative example may be applied to other types of platforms. The platform may be, for example, a mobile platform, a stationary platform, a land-based structure, an aquatic-based structure, or a space-based structure. More specifically, the platform may be an aircraft, a surface ship, a tank, a personnel carrier, a train, a spacecraft, a space station, a satellite, a submarine, an automobile, a power plant, a bridge, a dam, a house, a manufacturing facility, a building, a tool, a mechanical structure, or some other suitable platform or structure where a divider with an emergency passage feature is desirable.

In this illustrative example, platform **100** takes the form of aircraft **102.** In this illustrative example, when platform **100** takes the form of aircraft **102,** aircraft **102** includes passenger aisle **104** and passenger suite **106.** Passenger aisle **104** typically runs longitudinal along the length of aircraft **102** and leads to at least one passenger suite **106.**

As used herein, a first component "connected to" or "coupled to" or "associated with" a second component means that the first component can be connected directly or indirectly to the second component. The connection is a physical association. In other words, additional components may be present between the first component and the second component. The first component is considered to be indirectly connected to the second component when one or more additional components are present between the two components. When the first component is directly connected to the second component, no additional components are present between the two components.

For example, a first component can be considered to be physically connected to a second component by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

Passenger suite **106** includes divider **108** and passenger seat **110.** Divider **108** separates passenger suite **106** from passenger aisle **104.** Divider **108** is positioned between passenger suite **106** and passenger aisle **104.** Divider **108** provides privacy to occupants of passenger suite **106** from passenger aisle **104.**

Divider **108** includes first fixed partition **112,** second fixed partition **114,** and movable partition **116.** Second fixed partition **114** is separated from first fixed partition **112** by space **120.** Space **120** is an opening between first fixed partition **112** and second fixed partition **114.** Space **120** is sized to provide adequate room for ingress/egress **122** of a passenger into and out of passenger suite **106.**

Movable partition **116** is connected to first fixed partition **112** with translation device **124.** One example of translation device **124** may be linear rails **140** connected to first fixed partition **112** within pocket **130.** Brace **150** is connected to movable partition **116** with, for example, zipper **152.** Other means of connecting movable partition **116** to brace **150** are also envisioned such as snaps **158.** Brace **150** slides on linear rails **140.** As a result, in this example, movable partition **116** slides on linear rails **140.** Another example of translation device **124** may be retractable cord **142** connected to first fixed partition **112** within pocket **130.** In this example, movable partition **116** is a collapsible **134** curtain with eyelets that hangs and slides on retractable cord **142.** In either example, translation device **124** is connected to constant force spring **144.** Constant force spring **144** urges movable partition **116** toward first fixed partition **112** to retract **132** or collapse **134** within pocket **130.** Movable partition **116** is releasably connected to second fixed partition **114** with connection device **126.** Examples of connection device **126** may be hook and loop fastener **136** or magnet **138** or snaps **146.**

First fixed partition **112** includes pocket **130** for housing movable partition **116.** Movable partition **116** may be concealed within pocket **130.** Movable partition **116** is retractable **132** or collapsible **134** "accordion style" within pocket **130** of first fixed partition **112.** Movable partition **116** may just retract and not be housed within a pocket of first fixed partition **112.** First fixed partition **112** may include straps **154** to secure movable partition **116** to first fixed partition **112** when movable partition **116** is retracted or when collapsed within pocket **130.** First fixed partition **112** may include lid **156.** Lid **156** is connected to first fixed partition **112** over pocket **130.** Lid **156,** when affixed to first fixed partition **112,** conceals movable partition **116** within first fixed partition **112.**

Movable partition **116** moves between open position **160** and closed position **162.** As a primary opening mechanism, translation device **124** facilitates movement of movable partition **116** between open position **160** and closed position **162.** Constant force spring **144** urges movable partition **116** to open position **160.** When movable partition **116** is in open position **160,** space **120** allows for ingress/egress **122** of a passenger into and out of passenger suite **106.** When movable partition **116** is in closed position **162,** connection device **126** releasably connects movable partition **116** to second fixed partition **114.** Connection device **126** is strong enough to overcome the urging of constant force spring **144** to keep movable partition **116** in closed position **162** unless movable partition **116** is acted on by a force which breaks the releasable connection of connection device **126.** When the releasable connection of connection device **126** is disconnected and translation device **124** is properly operating, constant force spring **144** of translation device **124** automatically moves movable partition **116** to open position **160.**

Translation device **124** provides the primary opening mechanism for divider **108.** When the primary opening mechanism is operating via translation device **124,** movable partition **116** moves between first fixed partition **112** and second fixed partition **114** on axis **170.** Movable partition **116** moves between open position **160** and closed position **162** through space **120** on axis **170** via translation device **124.** When movable partition **116** moves on axis **170,** movable partition **116** has planar shape **172.** When in closed position **162,** movable partition **116** is generally vertically oriented and has planar shape **172.** In other words, in normal operation, movable partition **116** moves between open position **160** and closed position **162** on axis **170** while shaped substantially flat or planar shape **172.**

In the event of a failure of the primary opening mechanism, a secondary opening mechanism which provides an emergency passage feature is available where movable partition **116** takes on arcuate shape **174.** Arcuate shape **174** is possible because movable partition **116** is flexible **176.** Movable partition **116** may comprise layered fabric **180** having stitching **182.** Movable partition **116** may be padded **184** on one or both lateral sides. In normal operation using the primary opening mechanism, movable partition **116** is generally vertically oriented and the lateral sides are the sides of movable partition **116** that face passenger aisle **104** and the interior of passenger suite **106.**

An important aspect of divider **108** is the secondary opening mechanism which provides the emergency passage feature. If an occupant of passenger suite **106** tries to move movable partition **116** from closed position **162** to open position **160** but translation device **124** malfunctions and an occupant of passenger suite **106** needs to exit the suite, the passenger can override the primary opening mechanism provided by translation device **124** by initiating the secondary opening mechanism. To initiate the secondary opening mechanism, while movable partition **116** is in closed position **162,** a force that intersects axis **170** is applied to movable partition **116.** The force must be strong enough to overcome the releasable connection of movable partition **116** to second fixed partition **114** provided by connection device **126.** Because movable partition **116** is flexible **176,** movable partition **116** moves or bends to arcuate shape **174** as the releasable connection between movable partition **116** and second fixed partition **114** is overcome by the force applied to movable partition **116.** As movable partition **116** moves to arcuate shape **174,** space **120** becomes open and ingress/egress **122** of passenger suite **106** is possible even when translation device **124** malfunctions. The flexible nature of movable partition **116** to arcuate shape **174** when acted on by a force that intersects axis **170** is the secondary opening mechanism and provides an emergency passage feature.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

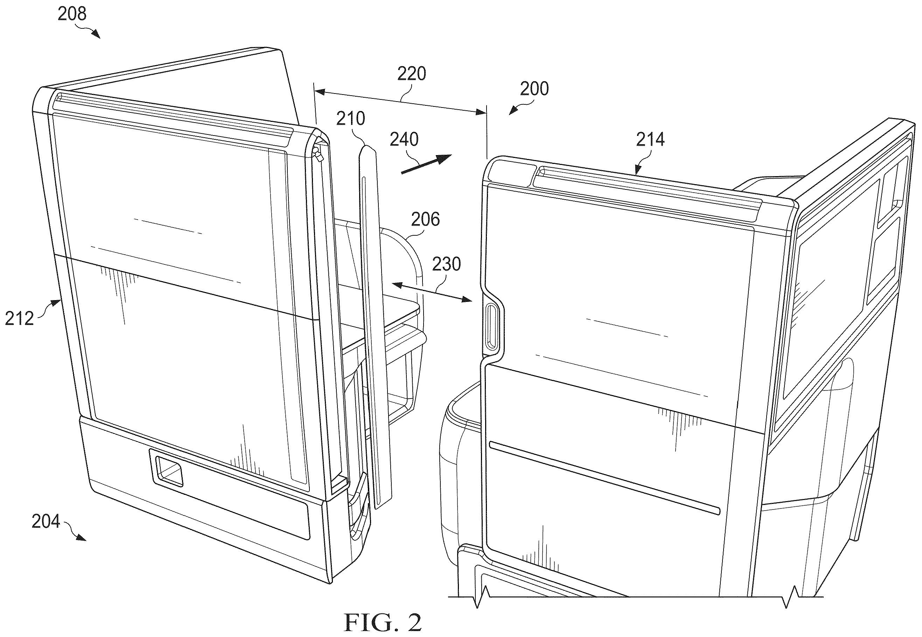

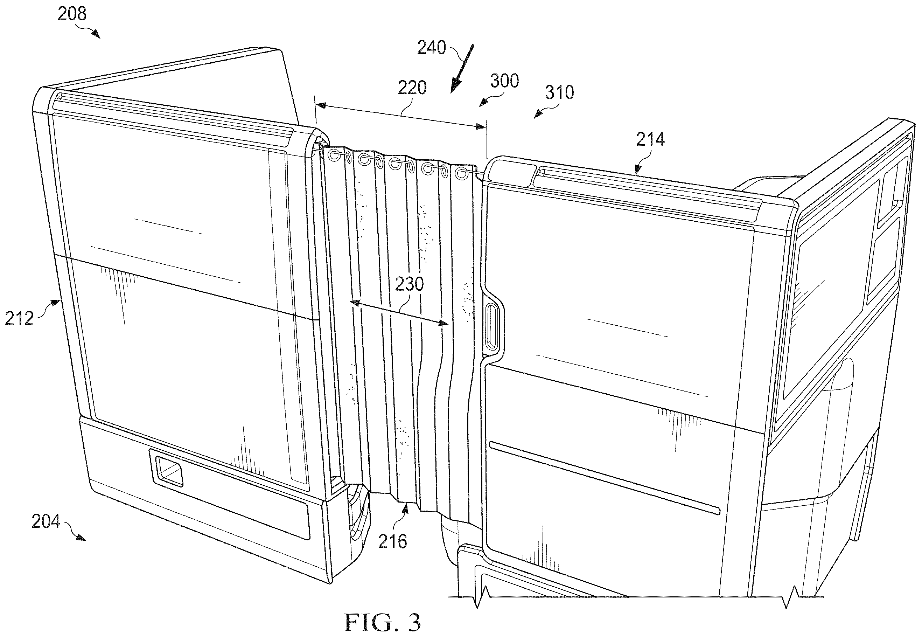

With reference next to **Figures 2-3****,** illustrations of divider **208** in open position **200** and closed position **300.** In these illustrative examples and the illustrative examples that follow, the same reference numeral may be used in more than one figure. This reuse of a reference numeral in different figures represents the same element in the different figures. The components illustrated in **Figure 2** are examples of physical implementations of divider **108** shown in block form in **Figure 1****.**

As illustrated divider **208** separates passenger suite **206** from passenger aisle **204.** Divider **208** is positioned between passenger suite **206** and passenger aisle **204.** Divider **208** includes first fixed partition **212,** second fixed partition **214,** and movable partition **216.** Second fixed partition **214** is separated from first fixed partition **212** by space **220.** Space **220** is an opening between first fixed partition **212** and second fixed partition **214.** Space **220** is sized to provide adequate room for ingress/egress of a passenger into and out of passenger suite **206.**

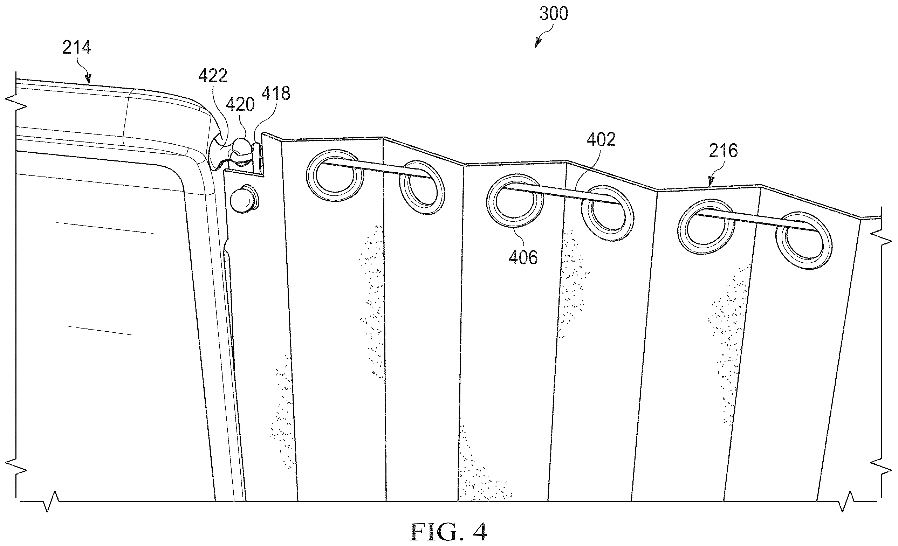

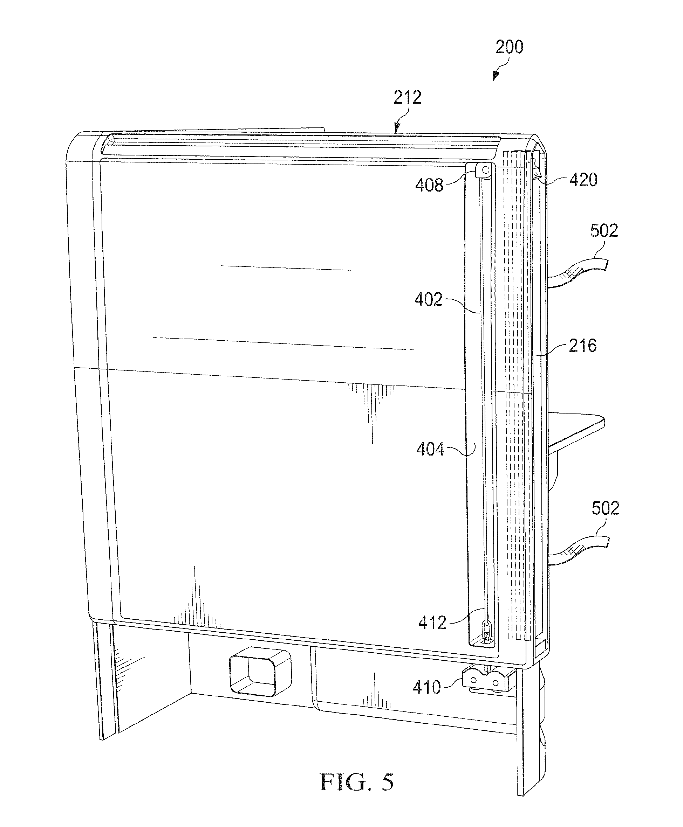

With reference next to **Figures 4-6****,** illustrations of the translation device for divider **208** are depicted in accordance with an illustrative example. In this illustrative example, the translation device for divider **208** is retractable cord **402.** Retractable cord **402** is connected to first fixed partition **212** within pocket **404.** In this example, movable partition **216** is a collapsible curtain with eyelets **406** that hangs and slides on retractable cord **402.** Retractable cord **402** is routed around pulley **408** and is connected to constant force spring **410** at end **412** of retractable cord **402.** Constant force spring **410** is connected to first fixed partition **212.** Constant force spring **410** urges movable partition **216** toward first fixed partition **212** to retract or collapse movable partition **216** adjacent to first fixed partition **212** or within pocket **404** of first fixed partition **212.** Retractable cord **402,** and thus movable partition **216,** is releasably connected to second fixed partition **214** with a connection device. In this illustrative example, magnet **420** is connected to retractable cord **402** at end **418** of retractable cord **402.** Magnet **420** is magnetically attracted to magnet **422** embedded within second fixed partition **214.** Optionally, magnet **420** or magnet **422** may be a ferromagnetic material instead which could also provide the magnetic connection to the remaining magnet.

When in open position, movable partition **216** may be concealed within pocket **404.** Movable partition **216** is retractable or collapsible within pocket **404** of first fixed partition **212.** Movable partition **216** may just retract and not be housed within a pocket of first fixed partition **212.** First fixed partition **212** may include straps **502** to secure movable partition **216** to first fixed partition **212** when movable partition **216** is retracted. First fixed partition **212** may include lid **210.** Lid **210** is removably connected to first fixed partition **212** over pocket **404.** Lid **210,** when affixed to first fixed partition **212,** conceals movable partition **216** within first fixed partition **212.**

Movable partition **216** moves between open position **200** and closed position **300.** Retractable cord **402** facilitates movement of movable partition **216** between open position **200** and closed position **300.** Constant force spring **410** urges movable partition **216** to open position **200.** When movable partition **216** is in open position **200,** space **220** allows for the ingress/egress of a passenger into and out of passenger suite **206.** When movable partition **216** is in closed position **300,** retractable cord **402** and magnet **420** releasably connect movable partition **216** to second fixed partition **214.** The magnetic attraction of magnet **420** to magnet **422** is strong enough to overcome the urging of constant force spring **410** to keep movable partition **216** in closed position **300** unless movable partition **216** is acted on by a force which breaks the releasable connection. It is envisioned that hook and loop fasteners could be used instead or additionally and represented by numerals **420** and **422** in the Figures as well. When the releasable connection is disconnected and retractable cord **402** is properly operating, constant force spring **410** automatically urges movable partition **216** towards first fixed partition **212** to rest at open position **200.**

In this illustrative example, retractable cord **402** provides the primary opening mechanism for divider **208.** Movable partition **216** moves between first fixed partition **212** and second fixed partition **214** on axis **230.** Movable partition **216** moves between open position **200** and closed position **300** through space **220** on axis **230** via retractable cord **402.** When movable partition **216** moves on axis **230,** movable partition **216** has planar shape **310.** When in closed position **300,** movable partition **216** is generally vertically oriented and has planar shape **310.** In other words, in normal operation, movable partition **216** moves between open position **200** and closed position **300** on axis **230** while shaped substantially flat or planar shape **310.**

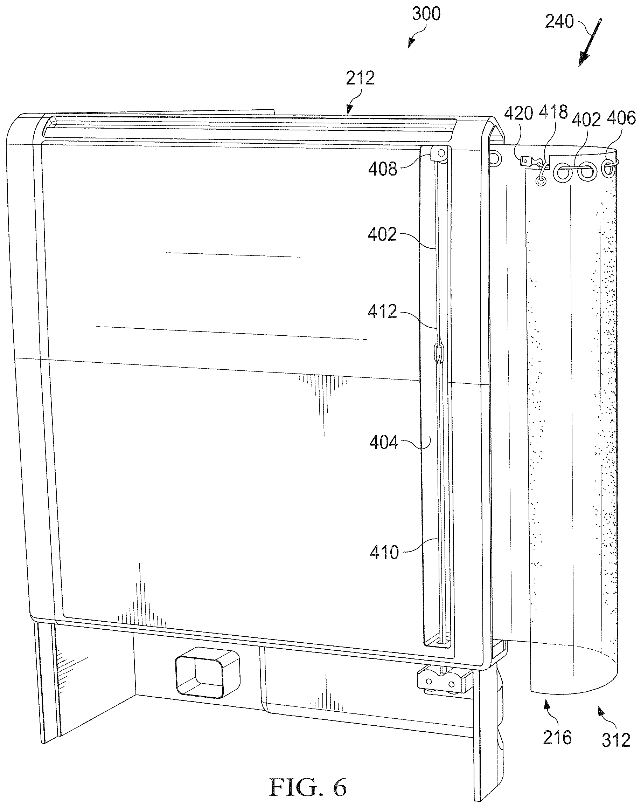

In the event of a failure of the primary opening mechanism, a secondary opening mechanism which provides an emergency passage feature is available where movable partition **216** takes on arcuate shape **312** (shown in **Figure 6****).** Arcuate shape **312** is possible because movable partition **216** is flexible.

To initiate the secondary opening mechanism, while movable partition **216** is in closed position **300,** a force that intersects axis **230,** such as force **240,** is applied to movable partition **216.** Force **240** must be strong enough to overcome the releasable connection of movable partition **216** to second fixed partition **214.** Because movable partition **216** is flexible, movable partition **216** moves or bends to arcuate shape **312** as the releasable connection between movable partition **216** and second fixed partition **214** is overcome by force **240** applied to movable partition **216.** As movable partition **216** moves to arcuate shape **312,** space **220** becomes open and ingress/egress of passenger suite **206** is possible. The flexible nature of movable partition **216** to arcuate shape **312** when acted on by force **240** that intersects axis **230** is the secondary opening mechanism and provides an emergency passage feature.

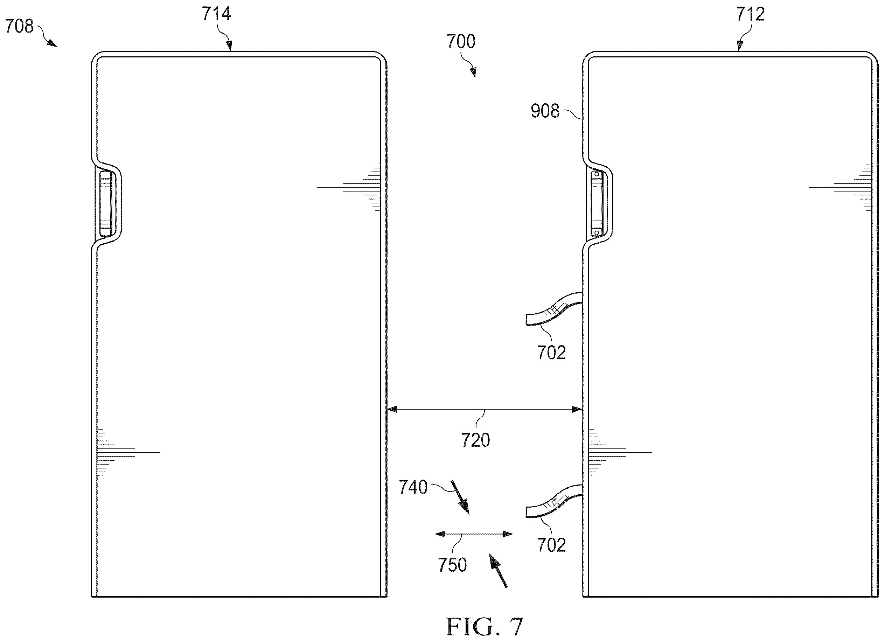

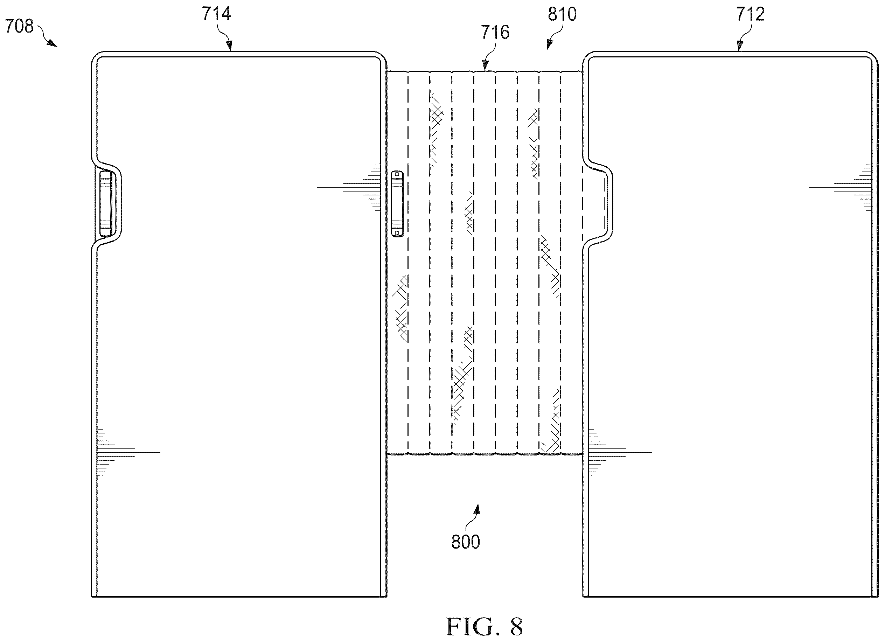

With reference next to **Figures 7-8****,** illustrations of divider **708** in open position **700** and closed position **800.** In these illustrative examples and the illustrative examples that follow, the same reference numeral may be used in more than one figure. This reuse of a reference numeral in different figures represents the same element in the different figures. The components illustrated in **Figure 7** are examples of physical implementations of divider **108** shown in block form in **Figure 1****.**

As illustrated divider **708** separates a passenger suite from a passenger aisle. Divider **708** is positioned between the passenger suite and the passenger aisle. Divider **708** includes first fixed partition **712,** second fixed partition **714,** and movable partition **716.** Second fixed partition **714** is separated from first fixed partition **712** by space **720.** Space **720** is an opening between first fixed partition **712** and second fixed partition **714.** Space **720** is sized to provide adequate room for ingress/egress of a passenger into and out of the passenger suite.

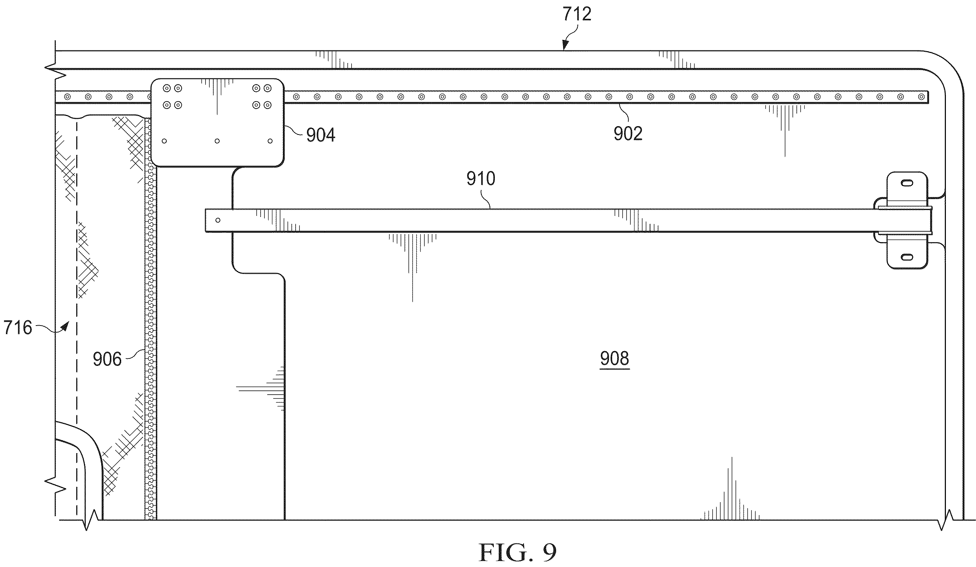

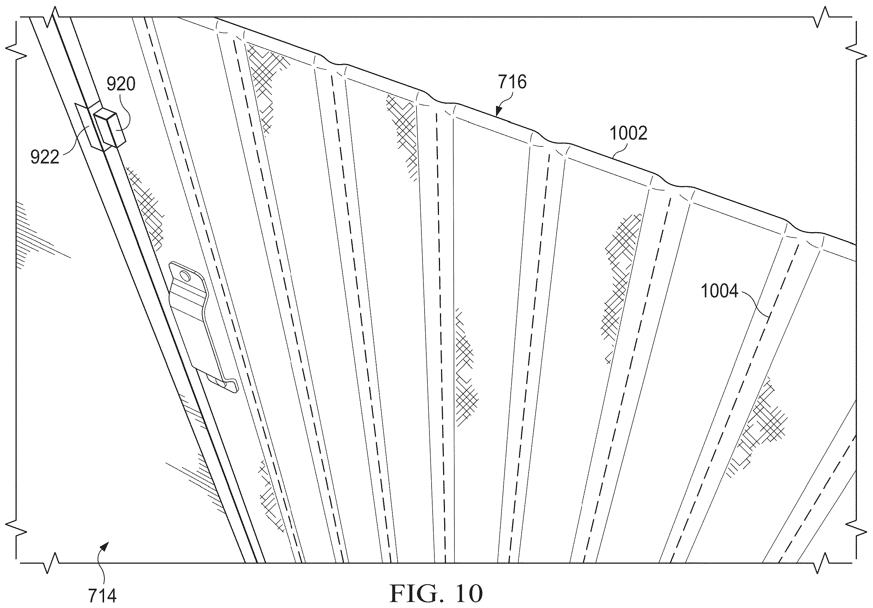

With reference next to **Figures 9-10****,** an illustration of the translation device for divider 708 is depicted in accordance with an illustrative example. In this illustrative example, the translation device for divider **708** is linear rail **902.** While a single linear rail is illustrated, additional linear rails may be incorporated as necessary. Linear rail **902** is connected to first fixed partition **712** within pocket **908.** Brace **904** is connected to movable partition **716** with, for example, zipper **906.** Brace **904** includes hardware for slidable engagement with linear rail **902.** As a result, in this example, movable partition **716** slides on linear rail **902.** Brace **904** is connected to constant force spring **910.** Constant force spring **910** is connected to first fixed partition **712.** Constant force spring **910** urges movable partition **716** toward first fixed partition **712** to retract movable partition **716** within pocket **908** of first fixed partition **712.** Movable partition **716** is releasably connected to second fixed partition **714** with a connection device. In this illustrative example, magnet **920** is connected to movable partition **716.** Optionally, magnet **920** may be a ferromagnetic steel rod connected to movable partition **716.** Magnet **920,** or the steel rod, is magnetically attracted to magnet **922** embedded within second fixed partition **714.** It is envisioned that hook and loop fasteners or even snaps could be used instead of or additionally and represented by numerals **920** and **922** in the Figures as well.

When in open position, movable partition **716** is concealed within pocket **908.** Movable partition **716** is retractable pocket **908** of first fixed partition **712.** First fixed partition **712** may include straps **702,** or any other fastening mechanism, to secure movable partition **716** to first fixed partition **712** when movable partition **716** is retracted.

Movable partition **716** moves between open position **700** and closed position **800.** Linear rail **902** facilitates movement of movable partition **716** between open position **700** and closed position **800.** Constant force spring **910** urges movable partition **716** to open position **700.** When movable partition **716** is in open position **700,** space **720** allows for the ingress/egress of a passenger into and out of the passenger suite. When movable partition **716** is in closed position **800,** magnet **920** releasably connects movable partition **716** to second fixed partition **714.** The magnetic attraction of magnet **920** to magnet **922** is strong enough to overcome the urging of constant force spring **910** to keep movable partition **716** in closed position **800** unless movable partition **716** is acted on by a force which breaks the releasable connection. When the releasable connection is disconnected and linear rail **902** is properly operating, constant force spring **910** automatically urges movable partition **716** towards first fixed partition **712** to rest at open position **700.**

In this illustrative example, linear rail **902** provides the primary opening mechanism for divider **708.** Movable partition **716** moves between first fixed partition **712** and second fixed partition **714** on axis **730.** Movable partition **716** moves between open position **700** and closed position **800** through space **720** on axis **730** via linear rail **902.** When movable partition **716** moves on axis **730,** movable partition **716** has planar shape **810.** When in closed position **800,** movable partition **716** is generally vertically oriented and has planar shape **810.** As the primary opening mechanism, movable partition **716** moves between open position **700** and closed position **800** on axis **730** while shaped substantially flat or planar shape **810.**

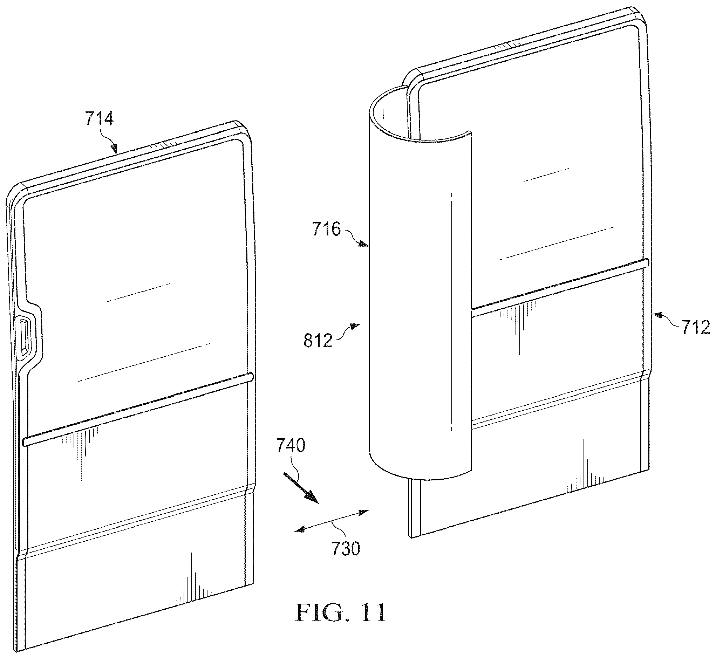

In the event of a failure of the primary opening mechanism, a secondary opening mechanism which provides an emergency passage feature is available where movable partition **716** takes on arcuate shape **812** (shown in **Figure 11****).** Arcuate shape **812** is possible because movable partition **716** is flexible. Movable partition **716** may comprise layered fabric **1002** having vertical stitching **1004.**

To initiate the secondary opening mechanism, while movable partition **716** is in closed position **800,** a force that intersects axis **730,** such as force **740,** is applied to movable partition **716.** Force **740** must be strong enough to overcome the releasable connection of movable partition **716** to second fixed partition **714.** Because movable partition **716** is flexible, movable partition **716** moves or bends to arcuate shape **812** as the releasable connection between movable partition **716** and second fixed partition **714** is overcome by force **740** applied to movable partition **716.** As movable partition **716** moves to arcuate shape **812,** space **720** becomes open and ingress/egress of the passenger suite is possible. The flexible nature of movable partition **716** to arcuate shape **812** when acted on by force **740** that intersects axis **730** is the secondary opening mechanism and provides an emergency passage feature.

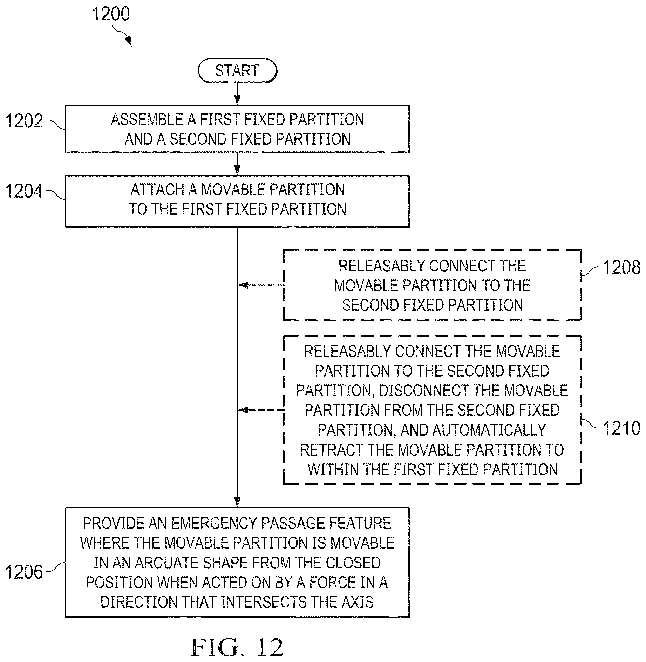

With reference next to **Figure 12****,** an illustration of a flowchart of a process **1200** for dividing a passenger suite of an aircraft from a passenger aisle of the aircraft is depicted in accordance with an illustrative example. The method depicted in **Figure 12** may be used in conjunction with the dividers depicted in **Figures 1-11****.**

The process begins by assembling a first fixed partition and a second fixed partition between a passenger seat of the passenger suite and the passenger aisle of the aircraft (operation **1202).** The first fixed partition is distanced a space from the second fixed partition. The process continues by attaching a movable partition to the first fixed partition. The movable partition is movable in a planar shape between an open position and a closed position on an axis through the space between the first fixed partition and the second fixed partition such that the movable partition is retractable in the planar shape relative to the first fixed partition (operation **1204).** The movable partition is connected to the first fixed partition via a translation device. At operation **1206,** the process provides an emergency passage feature where the movable partition is movable in an arcuate shape from the closed position when acted on by a force in a direction that intersects the axis such that the movable partition is retractable in the arcuate shape relative to the first fixed partition. At operation **1208,** the process releasably connects the movable partition to the second fixed partition. At operation **1210,** the process disconnects the movable partition from the second fixed partition and automatically retracts the movable partition to within the first fixed partition with a constant force spring connected to both the first fixed partition and the movable partition.

In some alternative implementations of an illustrative example, the function or functions noted in the blocks may not be necessary or may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

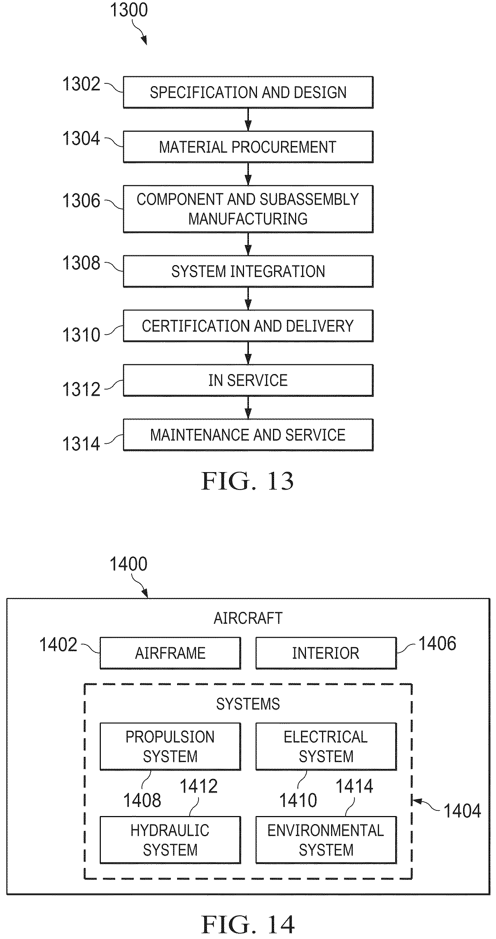

The illustrative examples of the disclosure may be further described in the context of aircraft manufacturing and service method **1300** as shown in **Figure 13** and aircraft **1400** as shown in **Figure 14****.** Turning first to **Figure 13****,** an illustration of a block diagram of an aircraft manufacturing and service method is depicted in accordance with an illustrative example. During pre-production, aircraft manufacturing and service method **1300** may include specification and design **1302** of aircraft **1400 in** **Figure 14** and material procurement **1304.**

During production, component and subassembly manufacturing **1306** and system integration **1308** of aircraft **1400 in** **Figure 14** takes place. Thereafter, aircraft **1400 in** **Figure 14** may go through certification and delivery **1310** in order to be placed in service **1312.** While in service **1312** by a customer, aircraft **1400 in** **Figure 14** is scheduled for routine maintenance and service **1314,** which may include modification, reconfiguration, refurbishment, and other maintenance, service, or inspection.

The apparatus of this disclosure may be installed on an aircraft during component and subassembly manufacturing **1306.** In addition, the apparatus of this disclosure may be retrofitted onto aircraft **1400 in** **Figure 14** during routine maintenance and service **1314** as part of a modification, reconfiguration, or refurbishment of aircraft **1400 in** **Figure 14****.**

Each of the processes of aircraft manufacturing and service method **1300** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers, and an operator may be an airline, a leasing company, a military entity, a service organization, and so on.

With reference now to **Figure 14****,** an illustration of a block diagram of an aircraft is depicted in which an illustrative example may be implemented. In this example, aircraft **1400** is produced by aircraft manufacturing and service method **1300 in** **Figure 13** and may include airframe **1402** with plurality of systems **1404** and interior **1406.** Examples of systems **1404** include one or more of propulsion system **1408,** electrical system **1410,** hydraulic system **1412,** and environmental system **1414.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **1300** in **Figure 13****.** In one illustrative example, components or subassemblies produced in component and subassembly manufacturing **1306** in **Figure 13** may be fabricated or manufactured in a manner similar to components or subassemblies produced while aircraft **1400** is in service **1312** in **Figure 13****.** As yet another example, one or more apparatus examples, method examples, or a combination thereof may be utilized during production stages, such as component and subassembly manufacturing **1306** and system integration **1308** in **Figure 13****.** One or more apparatus examples, method examples, or a combination thereof may be utilized while aircraft **1400** is in service **1312,** during maintenance and service **1314,** inclusive of inspection, in **Figure 13****,** or both. The use of a number of the different illustrative examples may substantially expedite the assembly of aircraft **1400,** reduce the cost of aircraft **1400,** or both expedite the assembly of aircraft **1400** and reduce the cost of aircraft **1400.**

The description of the different illustrative examples has been presented for purposes of illustration and description, and is not intended to be exhaustive or limited to the examples in the form disclosed. Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

The disclosure further comprises the following clauses:
1. A divider for a passenger suite of an aircraft providing an emergency passage feature, comprising:
   a first fixed partition (112) configured to be positioned between a passenger seat (110) and a passenger aisle (104) of the aircraft (102);
   a second fixed partition (114) configured to be distanced a space (120) from the first fixed partition (112);
   a movable partition (116) connected to the first fixed partition (112) and movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112); and
   wherein the movable partition (116) is flexible (176) to an arcuate shape (174) from the closed position (162) when acted on by a force in a direction that intersects the axis (170).
2. The divider of clause 1, wherein the translation device (124) is a linear rail (140) connected to the first fixed partition (112) and the movable partition (116).
3. The divider of clause 2, wherein the translation device further comprises:
   a brace (150) connected to an end of the movable partition (116), the brace (150) slidable on the linear rail (140); and
   a constant force spring (144) connected to the first fixed partition (116) and the brace (150).
4. The divider of clause 3, wherein the brace (150)is connected to the movable partition (116) with a zipper (152) or snaps (158).
5. The divider of any one of the preceding clauses, wherein when in the open position (160), the movable partition (116) is connected to the first fixed partition (112) and when in the closed position (162), the movable partition (116) is also releasably connected to the second fixed partition (114).
6. The divider of any one of the preceding clauses, wherein the first fixed partition (112) comprises a pocket (130) for containment of the movable partition (116) when in the open position (160).
7. The divider of any one of the preceding clauses, wherein the space (120) provides room for ingress/egress (122) of a passenger into/out of the passenger suite (106).
8. The divider of any one of the preceding clauses, wherein the movable partition (116) comprises layered fabric (180) and stitching (182).
9. The divider of any one of the preceding clauses, wherein when in the closed position (162), the movable partition (116) is releasably connected to the second fixed partition (112) with magnets (138) or a ferromagnetic material paired with a magnet connected to both the second fixed partition (114) and the movable partition (116).
10. The divider of any one of the preceding clauses, wherein the movable partition (116) is padded (184) on a first side facing the passenger aisle (104) and on a second side facing the passenger seat (110).
11. A passenger suite of an aircraft providing an emergency passage feature, comprising:
   a seat (110); and
   a divider (108) configured to be positioned between the seat (110) and a passenger aisle (104) of the aircraft (102), the divider (108) comprising:
      a first fixed partition (112) configured to be distanced a space (120) from a second fixed partition (114), the space (120) sized to provide ingress/egress (122) for a passenger into/out of the passenger suite (106);
      a movable partition (116) connected to the first fixed partition (112) and movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112), the movable partition (116) reachable by the passenger seated in the seat (110); and
      wherein the movable partition (116) is flexible (176) to an arcuate shape (174) from the closed position (162) when acted on by a force in a direction that intersects the axis (170).
12. The passenger suite of clause 11, wherein the translation device (124) is a linear rail (140) connected to the first fixed partition (112).
13. The passenger suite of clause 12, further comprising:
   a brace (150) connected to an end of the movable partition (116), the brace (150) slidable on the linear rail (140); and
   a constant force spring (144) connected to the first fixed partition (112) and the brace (150).
14. The passenger suite of clause 13, wherein the constant force spring (144) acts on the movable partition (116) to urge the movable partition (116) to the open position (160).
15. The passenger suite of any one of clauses 11-14, wherein when in the open position (160), the movable partition (116) is connected to the first fixed partition (112) and when in the closed position (162), the movable partition (116) is also releasably connected to the second fixed partition (114).
16. The passenger suite of any one of clauses 11-15, wherein when the movable partition (116) is in the open position (160), the movable partition (116) is housed within a pocket (130) of the first fixed partition (112).
17. A method for providing an emergency passage feature of a passenger suite of an aircraft, comprising:
   assembling (1202) a first fixed partition (112) and a second fixed partition (114), the first fixed partition (112) configured to be distanced a space (120) from the second fixed partition (114);
   attaching (1204) a movable partition (116) to the first fixed partition (112), the movable partition (116) movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112); and
   providing (1206) an emergency passage feature where the movable partition (116) is movable in an arcuate shape (174) from the closed position (162) when acted on by a force in a direction that intersects the axis (170).
18. The method of clause 17, wherein the movable partition (116) is releasably connected to the second fixed partition (114) with hook and loop fasteners (136) connected to the movable partition (116) and the second fixed partition (114).
19. The method of clause 17 or 18, wherein the movable partition (116) is releasably connected to the second fixed partition (114) with magnets (138) or a magnet paired with a ferromagnetic material connected to the movable partition (116) and the second fixed partition (114).
20. The method of any one of clauses 17-19, wherein the translation device (124) is a linear rail (140) and the movable partition (116) is slidable on the linear rail (140) connected to the first fixed partition (112) and wherein the movable partition (116) is retractable (132) within the first fixed partition (112) urged by a constant force spring (144) connected to both the translation device (124) and the first fixed partition (112) when the movable partition (116) is in both the planar shape (172) and the arcuate shape (174).

## Claims

1. A divider for a passenger suite of an aircraft providing an emergency passage feature, comprising:
a first fixed partition (112) configured to be positioned between a passenger seat (110) and a passenger aisle (104) of the aircraft (102);
a second fixed partition (114) configured to be distanced a space (120) from the first fixed partition (112);
a movable partition (116) connected to the first fixed partition (112) and movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112); and
wherein the movable partition (116) is flexible (176) to an arcuate shape (174) from the closed position (162) when acted on by a force in a direction that intersects the axis (170).

2. The divider of claim 1, wherein the translation device (124) is a linear rail (140) connected to the first fixed partition (112) and the movable partition (116).

3. The divider of claim 2, wherein the translation device further comprises:
a brace (150) connected to an end of the movable partition (116), the brace (150) slidable on the linear rail (140); and
a constant force spring (144) connected to the first fixed partition (116) and the brace (150).

4. The divider of claim 3, wherein the brace (150)is connected to the movable partition (116) with a zipper (152) or snaps (158).

5. The divider of any one of the preceding claims, wherein when in the open position (160), the movable partition (116) is connected to the first fixed partition (112) and when in the closed position (162), the movable partition (116) is also releasably connected to the second fixed partition (114).

6. The divider of any one of the preceding claims, wherein the first fixed partition (112) comprises a pocket (130) for containment of the movable partition (116) when in the open position (160).

7. The divider of any one of the preceding claims, wherein:
the space (120) provides room for ingress/egress (122) of a passenger into/out of the passenger suite (106); and/or
the movable partition (116) comprises layered fabric (180) and stitching (182).

8. The divider of any one of the preceding claims, wherein when in the closed position (162), the movable partition (116) is releasably connected to the second fixed partition (112) with magnets (138) or a ferromagnetic material paired with a magnet connected to both the second fixed partition (114) and the movable partition (116).

9. The divider of any one of the preceding claims, wherein the movable partition (116) is padded (184) on a first side facing the passenger aisle (104) and on a second side facing the passenger seat (110).

10. A passenger suite of an aircraft providing an emergency passage feature, comprising:
a seat (110); and
a divider (108) configured to be positioned between the seat (110) and a passenger aisle (104) of the aircraft (102), the divider (108) comprising:
a first fixed partition (112) configured to be distanced a space (120) from a second fixed partition (114), the space (120) sized to provide ingress/egress (122) for a passenger into/out of the passenger suite (106);
a movable partition (116) connected to the first fixed partition (112) and movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112), the movable partition (116) reachable by the passenger seated in the seat (110); and
wherein the movable partition (116) is flexible (176) to an arcuate shape (174) from the closed position (162) when acted on by a force in a direction that intersects the axis (170).

11. The passenger suite of claim 10, wherein the translation device (124) is a linear rail (140) connected to the first fixed partition (112), the passenger suite preferably further comprising:
a brace (150) connected to an end of the movable partition (116), the brace (150) slidable on the linear rail (140), and a constant force spring (144) connected to the first fixed partition (112) and the brace (150), optionally wherein the constant force spring (144) acts on the movable partition (116) to urge the movable partition (116) to the open position (160).

12. The passenger suite of claim 10 or 11, wherein:
when in the open position (160), the movable partition (116) is connected to the first fixed partition (112) and when in the closed position (162), the movable partition (116) is also releasably connected to the second fixed partition (114); and/or
when the movable partition (116) is in the open position (160), the movable partition (116) is housed within a pocket (130) of the first fixed partition (112).

13. A method for providing an emergency passage feature of a passenger suite of an aircraft, comprising:
assembling (1202) a first fixed partition (112) and a second fixed partition (114), the first fixed partition (112) configured to be distanced a space (120) from the second fixed partition (114);
attaching (1204) a movable partition (116) to the first fixed partition (112), the movable partition (116) movable via a translation device (124) in a planar shape (172) between an open position (160) and a closed position (162) on an axis (170) through the space (120) between the first fixed partition (112) and the second fixed partition (114) such that the movable partition (116) is retractable (132) in the planar shape (172) relative to the first fixed partition (112); and
providing (1206) an emergency passage feature where the movable partition (116) is movable in an arcuate shape (174) from the closed position (162) when acted on by a force in a direction that intersects the axis (170).

14. The method of claim 13, wherein the movable partition (116) is releasably connected to the second fixed partition (114) with:
hook and loop fasteners (136) connected to the movable partition (116) and the second fixed partition (114); and/or
magnets (138) or a magnet paired with a ferromagnetic material connected to the movable partition (116) and the second fixed partition (114).

15. The method of claim 13 or 14, wherein the translation device (124) is a linear rail (140) and the movable partition (116) is slidable on the linear rail (140) connected to the first fixed partition (112) and wherein the movable partition (116) is retractable (132) within the first fixed partition (112) urged by a constant force spring (144) connected to both the translation device (124) and the first fixed partition (112) when the movable partition (116) is in both the planar shape (172) and the arcuate shape (174).
